# EUROPEAN PATENT APPLICATION

(11) **EP 4 588 730 A1**
(43) Date of publication of application: **23.07.2025**
(21) Application number: 23864951.1
(22) Date of filing: 13.03.2023
(51) Int. Cl.: B60S 1/38

(54) **WIPER BLADE**

(30) Priority: 16.09.2022 JP 2022148122
(71) Applicant: Mitsuba Corporation, Kiryu-shi Gunma 376-8555 (JP)
(72) Inventor: TAMURA Kazuhisa, Kiryu-shi, Gunma 376-8555 (JP)
(74) Representative: Kurig, Thomas
(86) International application number: PCT/JP2023/009537
(87) International publication number: WO 2024/057585

(57) **Abstract**

The present invention reduces the number of parts and improves the work involved in assembly. The present invention has a main holder 40 that is coupled to a wiper arm, a vertebra 22 that is held by the main holder 40 and curves with a prescribed curvature, and a blade rubber 30 that is held by the vertebra 22 and makes contact with a front glass 11, wherein the main holder 40 comprises a first claw part 46 and a second claw part 47 that hold the vertebra 22 with a gap in the lengthwise direction thereof, and a supporting protrusion 49 that is provided between the first claw part 46 and the second claw part 47, and protrudes toward the vertebra 22, and the vertebra 22 comprises an elongated hole 22a in which the supporting protrusion 49 is engaged.

## Description

### Technical Field

The present invention relates to a wiper blade that is connected to an arm that is swung by a driving source and wipes a wiped surface.

### Background Art

Conventionally, vehicles such as automobiles are equipped with wiper devices. The wiper device is activated by turning on a wiper switch provided inside the vehicle. In this way, rainwater, dust, and other deposits attached to the wiped surface are wiped off, ensuring good visibility. Such a wiper device includes an arm that is swung by a driving source and a wiper blade that is connected to the arm.

For example, the wiper blade described in Patent Document 1 consists of a connecting lever (connecting member) connected to the wiper arm (arm) and a backing (vertebra) that provides rigidity and elasticity to the blade rubber. The backing is in a state in which movement toward the lengthwise direction with respect to the connecting lever is restricted. Specifically, by providing a support part between the backing and the connecting lever, movement of the backing toward the lengthwise direction with respect to the connecting lever is restricted.

### Citation List

### Patent Document

[Patent Document 1] Japanese Patent Application Laid-Open (JP-A) No. 2013-082431.

### SUMMARY

### Problems to be Solved

However, according to the wiper blade described in the above-mentioned Patent Document 1, a small support part is required, and it is necessary to assemble a support part between the connecting lever and the backing while aligning them with each other. Thus, in addition to complicating parts management, deterioration in assembly workability is unavoidable.

The purpose of the present invention is to provide a wiper blade that may reduce the number of parts and improve assembly workability.

### Means for Solving the Problems

An aspect of the present invention includes: a wiper blade connected to an arm swung by a driving source and wiping a wiped surface, including: a connecting member, connected to the arm; a vertebra, held by the connecting member and curved with a prescribed curvature; and a blade rubber, held by the vertebra and in contact with the wiped surface, and the connecting member including a first holding part and a second holding part, holding the vertebra with an interval in a lengthwise direction of the vertebra; a protruding part, provided between the first holding part and the second holding part and protruding toward the vertebra, and the vertebra including an engagement hole to which the protruding part is engaged.

### Effects

According to the present invention, by engaging the protruding part of the connecting member with the engagement hole of the vertebra, the movement of the vertebra toward the lengthwise direction with respect to the connecting member is restricted. Thus, by integrating the protruding part into the connecting member, the number of parts may be reduced compared to the past, which in turn improves assembly workability.

### BRIEF DESCRIPTION OF THE DRAWINGS

FIG. 1 is a perspective view of the wiper blade of Embodiment 1.
FIG. 2 is a partially enlarged perspective view of the main holder in FIG. 1.
FIG. 3 is an enlarged perspective view of FIG. 2 viewed from the blade rubber side.
FIG. 4 is a perspective view showing the blade rubber and the vertebra.
FIG. 5 is a cross-sectional view taken along line A-A in FIG. 3.
FIG. 6 is a cross-sectional view taken along line B-B in FIG. 3.
FIG. 7 is a cross-sectional view taken along line C-C in FIG. 3.
FIG. 8 is a cross-sectional view taken along line D-D in FIG. 7.
FIG. 9 is a perspective view of the main holder viewed from the wiper arm side.
FIG. 10 is a perspective view of the main holder viewed from the blade rubber side.
FIG. 11 is a cross-sectional view illustrating the assembly procedure (1) of the wiper blade.
FIG. 12 is a cross-sectional view illustrating the assembly procedure (2) of the wiper blade.
FIG. 13 is a cross-sectional view illustrating the assembly procedure (3) of the wiper blade.
FIG. 14 is a cross-sectional view illustrating the assembly procedure (4) of the wiper blade.
FIG. 15 is a perspective view of the main holder of Embodiment 2 viewed from the wiper arm side.
FIG. 16 is a perspective view of the main holder of Embodiment 2 viewed from the blade rubber side.

### DESCRIPTION OF THE EMBODIMENTS

### [Embodiment 1]

Hereinafter, Embodiment 1 of the present invention will be described in detail with reference to the drawings.

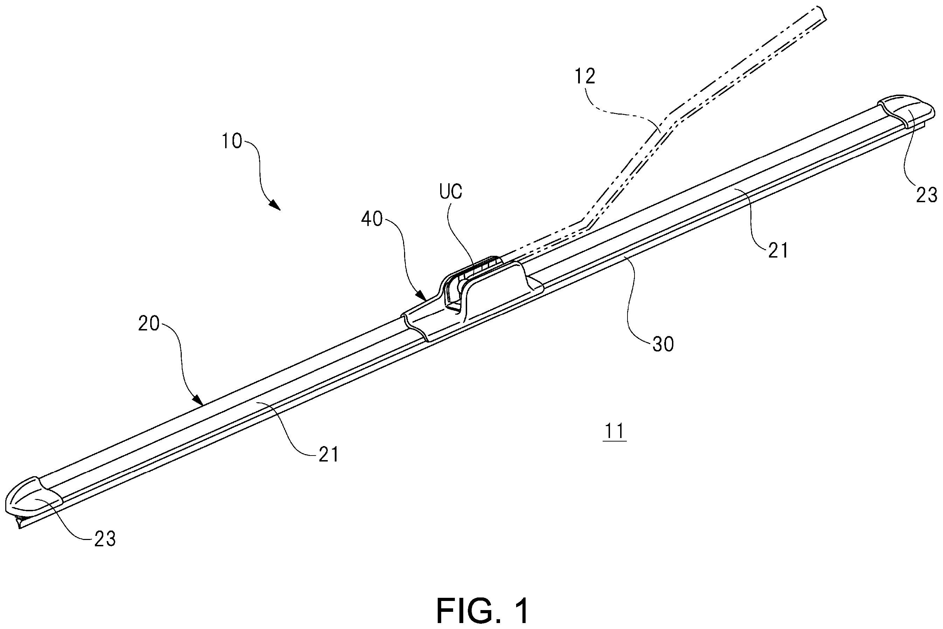

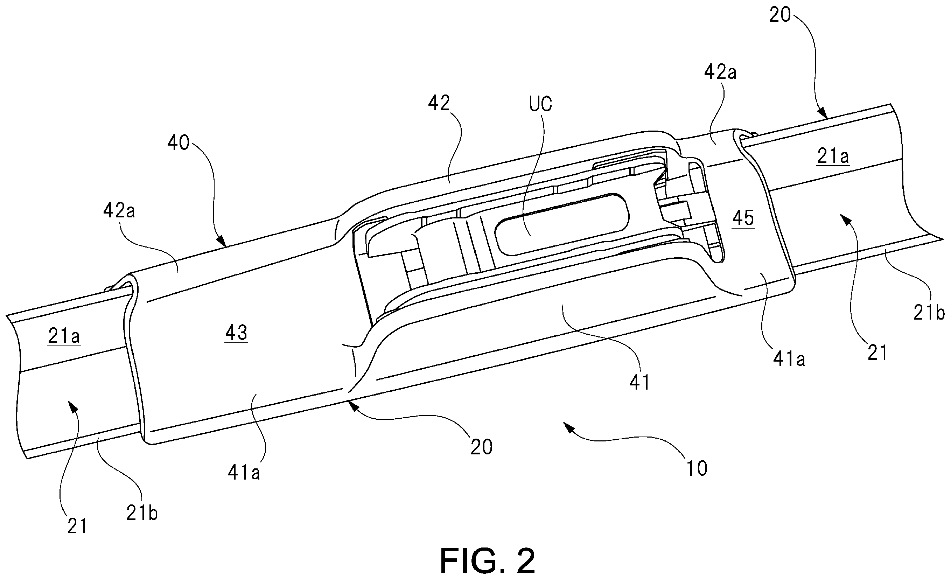

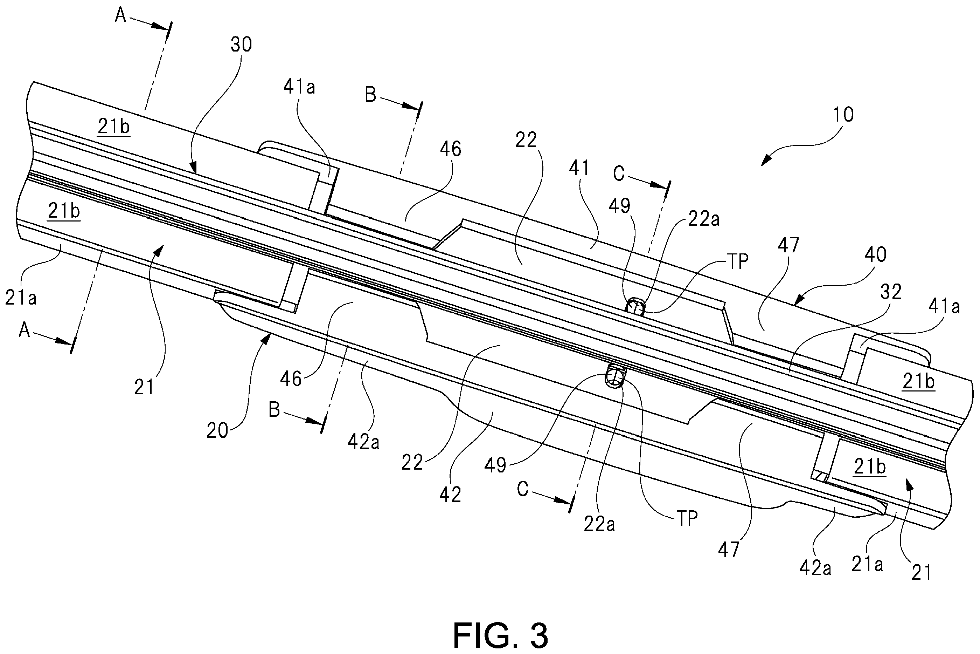

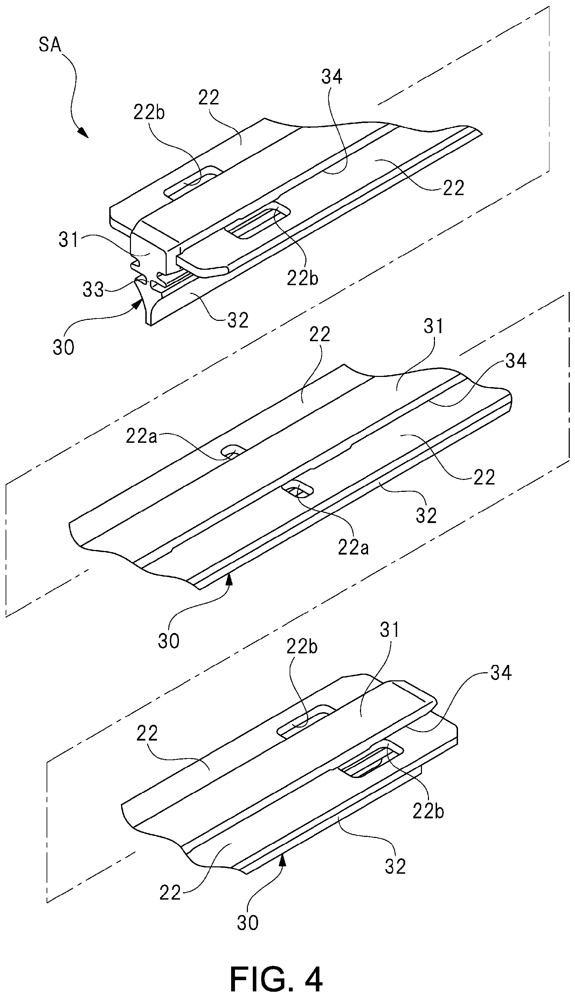

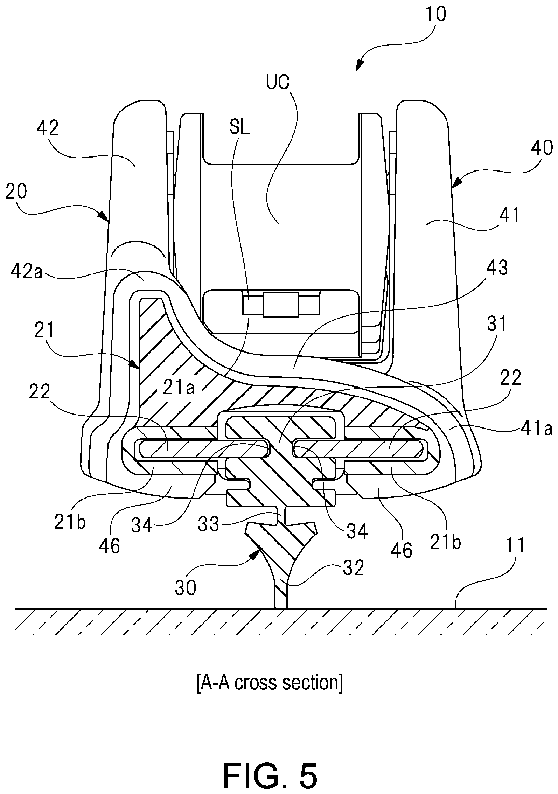

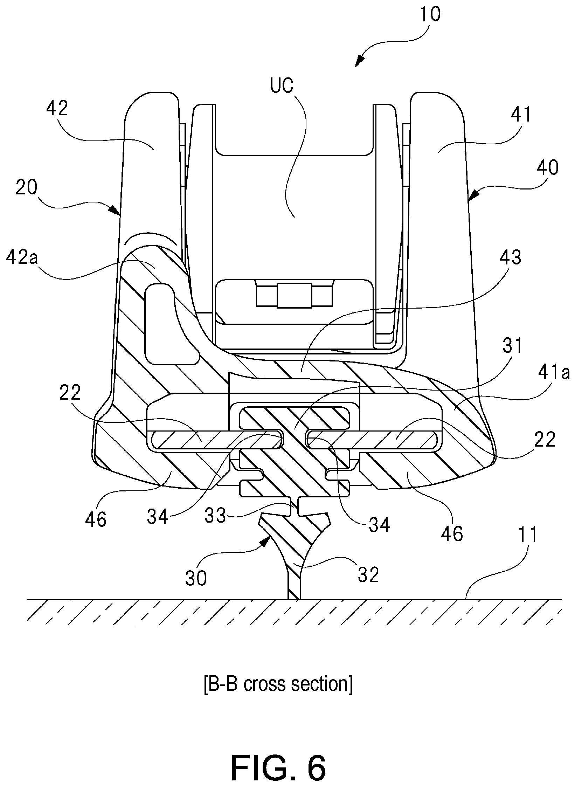

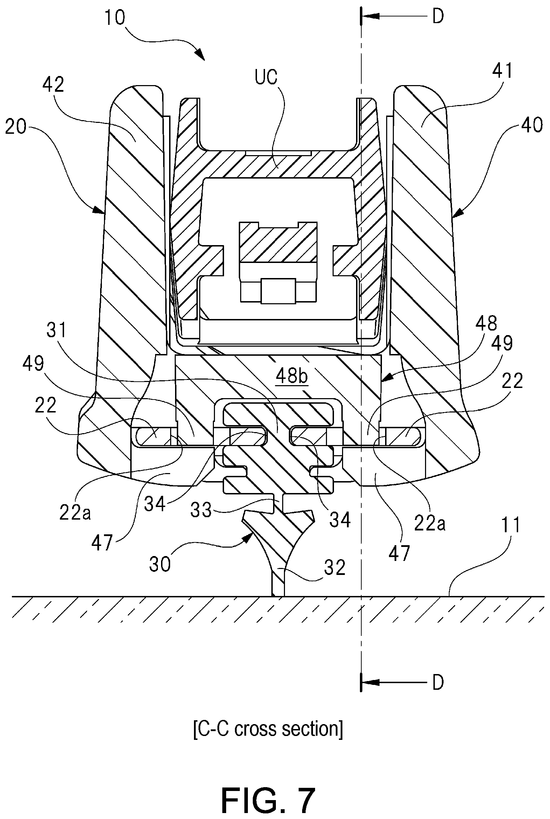

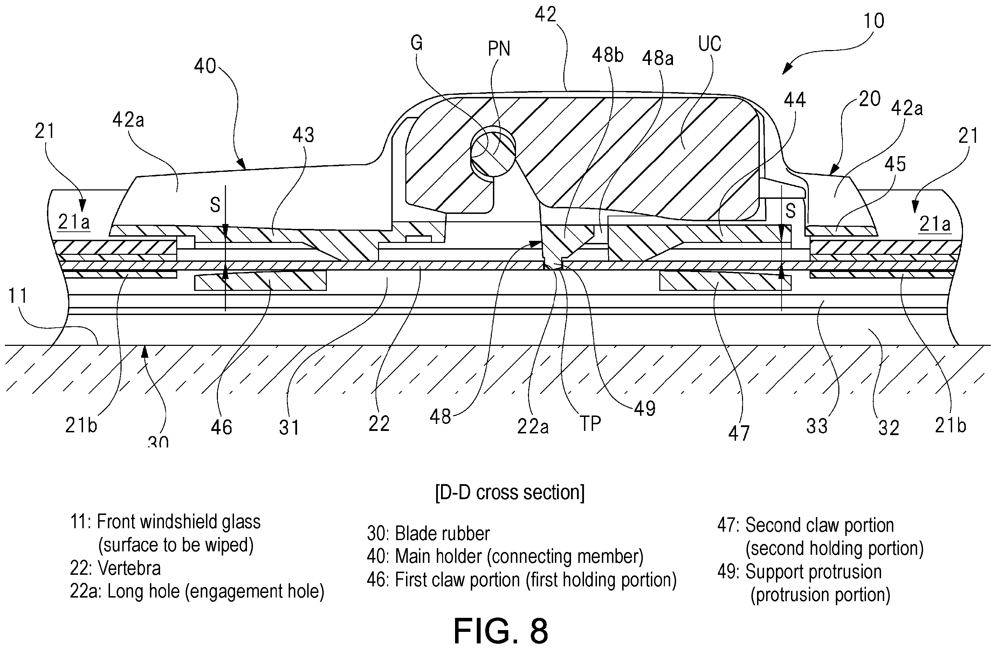

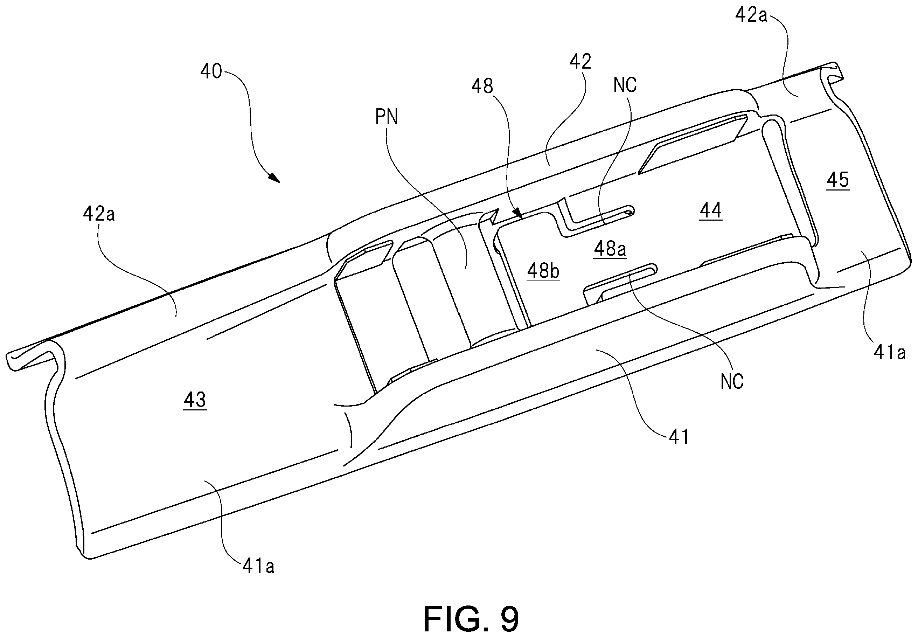

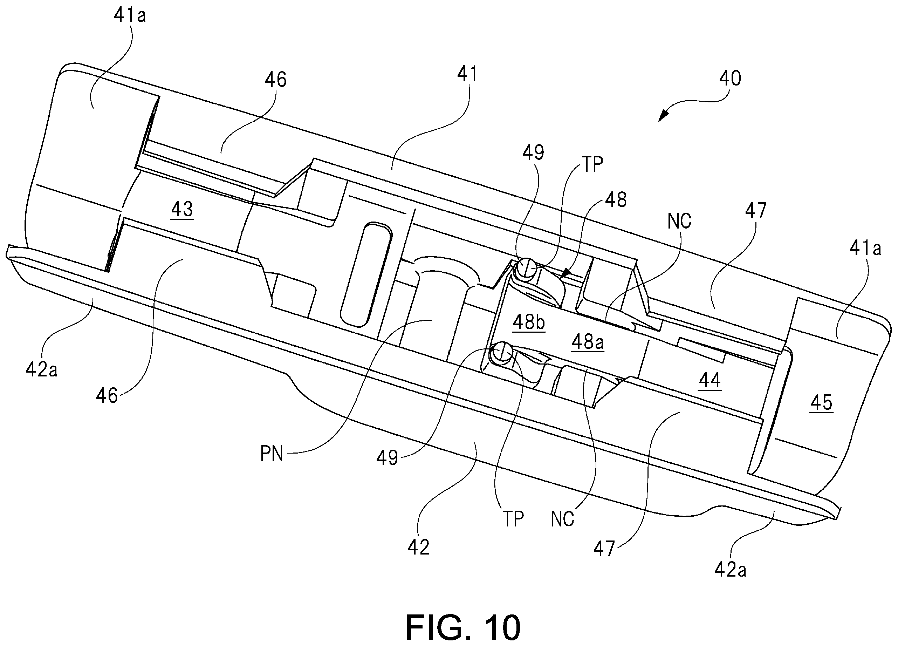

FIG. 1 is a perspective view of the wiper blade of Embodiment 1; FIG. 2 is a partially enlarged perspective view of the main holder in FIG. 1; FIG. 3 is an enlarged perspective view of FIG. 2 viewed from the blade rubber side; FIG. 4 is a perspective view showing the blade rubber and the vertebra; FIG. 5 is a cross-sectional view taken along line A-A in FIG. 3; FIG. 6 is a cross-sectional view taken along line B-B in FIG. 3; FIG. 7 is a cross-sectional view taken along line C-C in FIG. 3; FIG. 8 is a cross-sectional view taken along line D-D in FIG. 7; FIG. 9 is a perspective view of the main holder viewed from the wiper arm side; and FIG. 10 is a perspective view of the main holder viewed from the blade rubber side.

### [Overview of wiper blade]

The wiper blade 10 shown in FIG. 1 forms a wiper device that wipes the front glass (wiped surface) 11 of a vehicle such as an automobile. The wiper blade 10 includes a rubber holder 20 and a blade rubber 30. The rubber holder 20 holds the blade rubber 30, and is rotatably connected to the tip end part of the wiper arm (arm) 12, which is indicated by a two-dot chain line in the figure.

Here, the base end part of the wiper arm 12 is fixed to a pivot shaft (not shown) that is swung by a wiper motor (driving source). In this way, the wiper arm 12 and the wiper blade 10 are swung by the driving force of the wiper motor. Specifically, the wiper blade 10 reciprocates within a wiping range (not shown) formed between a lower inverted position and an upper inverted position of the front glass 11. In this way, rainwater, dust, etc. attached to the wiping range of the front glass 11 are wiped off.

It is noted that a link mechanism (not shown) is provided between the wiper motor and the pivot shaft to convert the rotational motion of the wiper motor into the swinging motion of the pivot shaft. However, the wiper blade 10 may also be applied to a so-called direct drive type wiper device in which the base end part of the wiper arm is directly fixed to the output shaft of the wiper motor.

### [Rubber holder]

As shown in FIG. 1 to FIG. 10, the rubber holder 20 includes one main holder 40, a pair of sub holders 21, a pair of vertebrae 22, and a pair of caps 23. The main holder 40 holds the pair of vertebrae 22. Further, a U-shaped clip UC is swingably mounted to the main holder 40, and the tip end part of the wiper arm 12 is connected to the U-shaped clip UC. Furthermore, the pair of vertebrae 22 held by the main holder 40 hold a main body part 31 of the blade rubber 30.

Further, the pair of sub holders 21 are provided on two sides of the main holder 40 in the lengthwise direction and hold the pair of vertebrae 22 similar to the main holder 40. Furthermore, the pair of caps 23 are provided on the side opposite to the main holder 40 side in the lengthwise direction of the pair of sub holders 21 and are fixed to the end parts of the pair of vertebrae 22. These caps 23 cover the end parts of the sub holders 21, the vertebrae 22, and the blade rubber 30, respectively, thereby improving the overall appearance of the wiper blade 10.

### [Blade rubber]

As shown in FIG. 4 to FIG. 8, the blade rubber 30 includes a main body part 31 held by the pair of vertebrae 22 and a lip part 32 contacted by the front glass 11. Further, a Neck part 33 is provided between the main body part 31 and the lip part 32. The Neck part 33 is narrower than the lip part 32 and has more flexibility than the lip part 32. Thus, as the blade rubber 30 reciprocates on the front glass 11, the lip part 32 tilts, and as a result, the tip end part of the lip part 32 cleanly wipes off rainwater, dust, etc. attached to the front glass 11.

The blade rubber 30 is provided throughout the entire lengthwise direction of the rubber holder 20, and the cross-sectional shape thereof along the width direction is substantially the same throughout the entire lengthwise direction of the blade rubber 30. A pair of Groove parts 34 extending in the lengthwise direction of the blade rubber 30 are provided on two sides of the main body part 31 in the width direction, that is, on two sides of the blade rubber 30 in the wiping direction (left and right sides in FIG. 5 to FIG. 7). These Groove parts 34 each contain a part (a part occupying approximately 1/3) of the vertebra 22 in the width direction. In this way, the blade rubber 30 is held by the main holder 40 and the sub holders 21 via the pair of vertebrae 22.

### [Vertebra]

As shown in FIG. 3 to FIG. 8, the pair of vertebrae 22 are held by the main holder 40 and the sub holders 21. Specifically, as shown in FIG. 4, the pair of vertebrae 22 are each formed into an elongated rod shape by punching a stainless-steel plate or the like into a flat-plate shape and have the function of a leaf spring. The pair of vertebrae 22 are provided throughout the entire lengthwise direction of the rubber holder 20 (see FIG. 1), and the lengths thereof are approximately equal to the length of the blade rubber 30.

The pair of vertebrae 22 are curved in advance to a prescribed curvature in a free state to which no external force is applied. Specifically, the curvature of the vertebrae 22 is smaller than the curvature of front glass 11. In this way, the entire lengthwise direction of the lip part 32 (see FIG. 5) may be brought into close contact in accordance with the curvature of the front glass 11. That is, sufficient wiping performance of the blade rubber 30 is ensured by making the curvature of the vertebrae 22 smaller than the curvature of the front glass 11.

More specifically, the pair of vertebrae 22 are held by a pair of first claw parts 46 and a pair of second claw parts 47 provided in the main holder 40, as shown in FIG. 3 and FIG. 6. It is noted that in FIG. 6, only the pair of first claw parts 46 are shown. Further, as shown in FIG. 5, a part (a part occupying approximately 2/3) of the pair of vertebrae 22 in the width direction are accommodated in a pair of vertebra housing parts 21b provided in the sub holder 21.

Furthermore, as shown in FIG. 4, elongated holes 22a are provided at the substantially central part of the pair of vertebrae 22 in the lengthwise direction, respectively. These elongated holes 22a correspond to engagement holes in the present invention. The elongated hole 22a extends in the lateral direction of the vertebra 22 and penetrates in the thickness direction of the vertebra 22. Specifically, the elongated hole 22a is wide in the lateral direction of the vertebra 22 and narrow in the lengthwise direction of the vertebra 22.

A pair of supporting protrusions 49 (see FIG. 10) provided in the main holder 40 enter and engage within these elongated holes 22a. The supporting protrusion 49 is movable inside the elongated hole 22a only in the lateral direction of the vertebra 22. In other words, the supporting protrusion 49 is not movable in the lengthwise direction of the vertebra 22 with respect to the elongated hole 22a.

In this way, the pair of vertebrae 22 are provided in a state in which movement toward the lengthwise direction thereof with respect to the main holder 40 is restricted, and rattling toward that direction is suppressed. On the other hand, when the sliding resistance of the blade rubber 30 against the front glass 11 is large, or when a relatively large load is applied to the wiping direction of the wiper blade 10 due to snow coverage, etc., the supporting protrusion 49 moves inside the elongated hole 22a. This prevents a large load from being applied on the supporting protrusion 49.

Further, cap fixing holes 22b are provided on two sides in the lengthwise direction of the pair of vertebrae 22, respectively. A pair of engagement protrusions (not shown) provided inside the cap 23 (see FIG. 1) are engaged with these cap fixing holes 22b. In this way, the pair of caps 23 are fixed on two sides in the lengthwise direction of each vertebra 22. It is noted that the sub holders 21 is held between the main holder 40 and the pair of caps 23 by fixing the pair of caps 23 to two sides in the lengthwise direction of the pair of vertebrae 22, respectively.

Here, as shown in FIG. 4, with the vertebrae 22 mounted to the Groove parts 34 of the blade rubber 30, the elongated holes 22a and the cap fixing holes 22b are each exposed to the outside. That is, the elongated holes 22a and the cap fixing holes 22b do not enter the Groove part 34. Thus, with the pair of vertebrae 22 assembled to the blade rubber 30, the assembly of these (blade sub-assembly SA) may be easily mounted to the main holder 40. Furthermore, in the blade sub-assembly SA state, the caps 23 may be easily mounted to two sides in the lengthwise direction of the pair of vertebrae 22. The assembly procedure of the wiper blade 10 will be described in detail later.

Further, the sub holders 21 that hold the pair of vertebrae 22 are made of a flexible plastic material or the like. Thus, the pair of sub holders 21 are elastically deformable to accommodate the curved shape of the pair of vertebrae 22. Thus, the pair of sub holders 21 does not adversely affect the wiping performance of the wiper blade 10.

### [Main holder]

The main holder 40 is rotatably connected to the tip end part of the wiper arm 12 via a U-shaped clip UC (see FIG. 1). The main holder 40 corresponds to the connecting member in the present invention. As shown in FIG. 9 and FIG. 10, the main holder 40 is formed into a substantially rectangular shape by injection molding a resin material such as plastic and extends in the lengthwise direction of the wiper blade 10. Here, the main holder 40 is a component connected to the wiper arm 12 via the U-shaped clip UC and requires a certain degree of strength. Specifically, the main holder 40 is made of a high hardness plastic material that does not deform due to the spring force of the pair of vertebrae 22 (see FIG. 4).

The main holder 40 includes a first long side wall part 41 and a second long side wall part 42 that extend in the lengthwise direction of the wiper blade 10 and stand perpendicularly to the front glass 11. The first long side wall part 41 is provided on the front side of the vehicle when the wiper blade 10 is in the downward inverted position of the front glass 11 (see FIG. 1). On the other hand, the second long side wall part 42 is provided on the rear side of the vehicle when the wiper blade 10 is in the downward inverted position of the front glass 11.

Two sides in the lengthwise direction (left and right sides in FIG. 9) of the second long side wall part 42 are each integrally provided with a first fin part 42a, which receives the traveling wind when the vehicle is traveling. This prevents the blade rubber 30 from lifting off the front glass 11 and the wiping performance from deteriorating during high-speed traveling. It is noted that two sides in the lengthwise direction of the first long side wall part 41 are each integrally provided with a low floor part 41a having a lower height from the front glass 11 than the first fin part 42a. In this way, the traveling wind flows along the surface of the main holder 40 from the low floor part 41a toward the first fin part 42a.

Further, a first bridging part 43, a second bridging part 44, and a third bridging part 45 formed in a substantially flat-plate shape are integrally provided between the first long side wall part 41 and the second long side wall part 42. The first bridging part 43 is provided on the side opposite to the wiper arm 12 side (on the left side in FIG. 9) in the lengthwise direction of the main holder 40 when the wiper blade 10 is mounted to the wiper arm 12. On the other hand, the third bridging part 45 is provided on the wiper arm 12 side (on the right side in FIG. 9) in the lengthwise direction of the main holder 40 when the wiper blade 10 is mounted to the wiper arm 12. The second bridging part 44 is provided between the first bridging part 43 and the third bridging part 45 in the lengthwise direction of the main holder 40.

Further, a connecting pin PN to which the U-shaped clip UC is rotatably connected is provided between the first long side wall part 41 and the second long side wall part 42 and between the first bridging part 43 and the second bridging part 44 in the lengthwise direction of the main holder 40. The connecting pin PN is formed in a columnar shape and is integrally formed with the main holder 40 when the main holder 40 is injection molded. That is, the connecting pin PN is made of resin material such as plastic. It is noted that, as shown in FIG. 8, the connecting pin PN is rotatably engaged with the engagement groove G provided on the U-shaped clip UC. In this way, the wiper arm 12 (see FIG. 1) is rotatably connected to the connecting pin PN via the U-shaped clip UC.

As shown in FIG. 10, a pair of first claw parts 46 and a pair of second claw parts 47 are provided on the front glass 11 side of the main holder 40. Specifically, the pair of first claw parts 46 are provided in a part corresponding to the first bridging part 43 in the lengthwise direction of the main holder 40, and the pair of second claw parts 47 are provided in a part corresponding to the second bridging part 43 in the lengthwise direction of the main holder 40. Thus, the connecting pin PN is provided between the first claw parts 46 and the second claw parts 47 in the lengthwise direction of the main holder 40. The pair of first claw parts 46 and the pair of second claw parts 47 are provided integrally with the first long side wall part 41 and the second long side wall part 42, respectively, and protrude toward the inside of the main holder 40.

These first claw parts 46 and second claw parts 47 hold the pair of vertebrae 22, as shown in FIG. 8. Specifically, the first claw parts 46 and the second claw parts 47 hold the vertebrae 22 with an interval in the lengthwise direction thereof, the first claw parts 46 correspond to the first holding part in the present invention, and the second claw parts 47 correspond to the second holding part in the present invention. A relatively large gap S is formed between the pair of vertebrae 22 held by the first claw parts 46 and the second claw parts 47 and the first bridging part 43 and the second bridging part 44. Specifically, this gap S is approximately twice as large (approximately 2.0 mm) as the wall thickness of the vertebrae 22 (approximately 1.0 mm).

This prevents the pair of vertebrae 22 from falling off the main holder 40, and allows the pair of vertebrae 22 to be flexibly bent at the first claw parts 46 and second claw parts 47. Thus, the blade rubber 30 held by the pair of vertebrae 22 may be smoothly curved in accordance with the curvature of the front glass 11 in the main holder 40, thereby ensuring sufficient wiping performance.

Thus, as shown in FIG. 8, the first bridging part 43 and the third bridging part 45 each cover the end parts of the sub holders 21 on the sides opposite to the caps 23 in the lengthwise direction. This improves the appearance of the vicinity of the main holder 40 that forms the wiper blade 10.

### [Elastic arm part]

As shown in FIG. 7 to FIG. 10, the second bridging part 44 of the main holder 40 is integrally provided with an elastic arm part 48 extending in the lengthwise direction of the main holder 40. The elastic arm part 48 corresponds to the arm part in the present invention, is formed in a substantially flat-plate shape, and is also formed in a substantially T-shape when viewed from the direction perpendicular to the front glass 11. An arm part main body 48a extending in the lengthwise direction of the main holder 40 is provided on the base end side (right side in FIG. 9) of the elastic arm part 48, and a vertebra supporting part 48b extending in the lateral direction of the main holder 40 is provided on the tip end side (left side in FIG. 9) of the elastic arm part 48.

Specifically, the longitudinal base end part of the arm part main body 48a is connected to the second bridging part 44, and notched parts NC are provided on two sides of the arm part main body 48a in the width direction of the main holder 40, respectively. In this way, the arm part main body 48a may be elastically deformed in the direction perpendicular to the front glass 11 with respect to the second bridging part 44.

Further, the vertebra supporting part 48b is integrally provided at the longitudinal tip end part of the arm part main body 48a. As shown in FIG. 9, the surface of the vertebra supporting part 48b opposite to the front glass 11 side is a flat surface that is flush with the surfaces of the second bridging part 44 and the arm part main body 48a. This prevents the U-shaped clip UC mounted to the connecting pin PN from interfering with the elastic arm part 48.

Furthermore, as shown in FIG. 10, a pair of supporting protrusions 49 are integrally provided on the front glass 11 side of the vertebra supporting part 48b. These supporting protrusions 49 are provided between the pair of first claw parts 46 and the pair of second claw parts 47 in the lengthwise direction of the main holder 40, and protrude from the vertebra supporting parts 48b toward the vertebrae 22(front glass 11) at a predetermined height. It is noted that the pair of supporting protrusions 49 correspond to the protruding part in the present invention.

The pair of supporting protrusions 49 are provided on the tip end side of the elastic arm part 48 in the lengthwise direction, and are parts that respectively enter the elongated holes 22a of the pair of vertebrae 22. These supporting protrusions 49 are formed in a columnar shape, and the protrusion height thereof is approximately 1.3 mm, which is slightly larger than the wall thickness of the vertebrae 22 (approximately 1.0 mm). In this way, the pair of supporting protrusions 49 may be reliably engaged with the pair of elongated holes 22a, respectively.

Further, the pair of supporting protrusions 49 are provided on two sides of the vertebra supporting part 48b in the lengthwise direction, and are not provided on the extension of the arm part main body 48a in the lengthwise direction. Specifically, as shown in FIG. 3, when the wiper blade 10 is viewed from the direction perpendicular to the front glass 11, the blade rubber 30 and the pair of supporting protrusions 49 are provided in non-overlapping positions, respectively. Thus, in the state shown in FIG. 3, for example, by pressing the supporting protrusions 49 using a tapered tool (such as a screwdriver), the vertebrae 22 may be unlocked from the main holder 40.

Furthermore, each tip end part of the pair of supporting protrusions 49 is provided with a tapered surface TP. Specifically, the tapered surfaces TP are provided on the second claw part 47 side of the supporting protrusions 49 in the lengthwise direction of the main holder 40. These tapered surfaces TP are inclined at a predetermined angle so as to gradually lower the height of the supporting protrusions 49 toward the second claw part 47 side. In this way, the pair of vertebrae 22 are easily mounted from the second claw part 47 side in the lengthwise direction of the main holder 40. However, depending on the specifications of the supporting protrusions 49 (protrusion height, shape, etc.), the tapered surfaces TP may be omitted.

Further, as shown in FIG. 9 and FIG. 10, when the main holder 40 is viewed from the direction perpendicular to the front glass 11, the connecting pin PN to which the U-shaped clip UC is mounted and the supporting protrusions 49 provided on the vertebra supporting part 48b are provided offset from each other in the lengthwise direction of the vertebrae 22. Specifically, the connecting pin PN is provided between the first bridging part 43 and the supporting protrusions 49 in the lengthwise direction of the main holder 40, and the supporting protrusions 49 (elastic arm part 48) are provided between the connecting pin PN and the second bridging part 44 in the lengthwise direction of the main holder 40.

In this way, when the main holder 40 is viewed from the direction perpendicular to the front glass 11, the connecting pin PN and the supporting protrusions 49 (elastic arm part 48) do not overlap, and as a result, the mold used for injection molding the main holder 40 may be easily released. That is, the shape of the main holder 40 is a shape that takes into consideration moldability without causing undercuts.

### [Sub holder]

Here, as shown in FIG. 1, the pair of sub holders 21 are provided on two sides of the main holder 40 in the lengthwise direction and occupy most of the rubber holder 20. Thus, these sub holders 21 are components that greatly affect the appearance of the wiper blade 10. As shown in FIG. 5, the sub holder 21 includes a second fin part 21a and a pair of vertebra housing parts 21b.

It is noted that in the same way as the first fin part 42a (see FIG. 2) of the main holder 40, the second fin part 21a is also a part that receives the traveling wind when the vehicle is traveling. This prevents the blade rubber 30 from lifting off the front glass 11 and the wiping performance from deteriorating during high-speed traveling. That is, the inclined surface SL (see

FIG. 5) forming the surface of the second fin part 21a faces the front side of the vehicle (the right side in FIG. 5).

The pair of vertebra housing parts 21b each have a substantially U-shaped cross section, and are integrally provided on the front glass 11 side of the second fin part 21a. The pair of vertebra housing parts 21b are opened toward the blade rubber 30 so as to face each other. In this way, a part of the pair of vertebrae 22 (a part occupying approximately 2/3) enters the vertebra housing parts 21b.

Here, the second fin part 21a is made of a flexible elastic material (such as silicone rubber), the pair of vertebra housing parts 21b are made of resin material (soft plastic, etc.) that is harder than the second fin part 21a. Specifically, the sub holder 21 having the second fin part 21a and the pair of vertebra housing parts 21b is formed into a long length by simultaneously extruding an elastic material such as silicone rubber and a resin material such as soft plastic. In other words, the sub holder 21 is a two-color molded product.

It is noted that the vertebrae 22 is movably inserted inside the vertebra housing parts 21b via a predetermined gap. In this way, the vertebrae 22 may be easily mounted inside the vertebra housing parts 21b, thereby improving the ease of assembling the wiper blade 10. Further, since the vertebrae 22 may easily slide inside the vertebra housing parts 21b, the spring force of the vertebrae 22 may be efficiently transmitted to the blade rubber 30.

### [Wiper blade assembly procedure]

Next, the assembly procedure of the wiper blade 10 formed as described above will be described in detail with reference to the drawings.

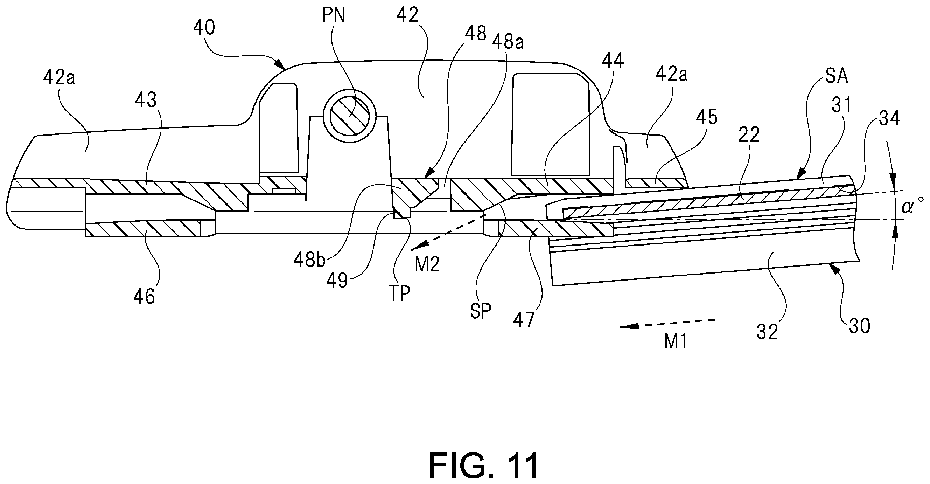

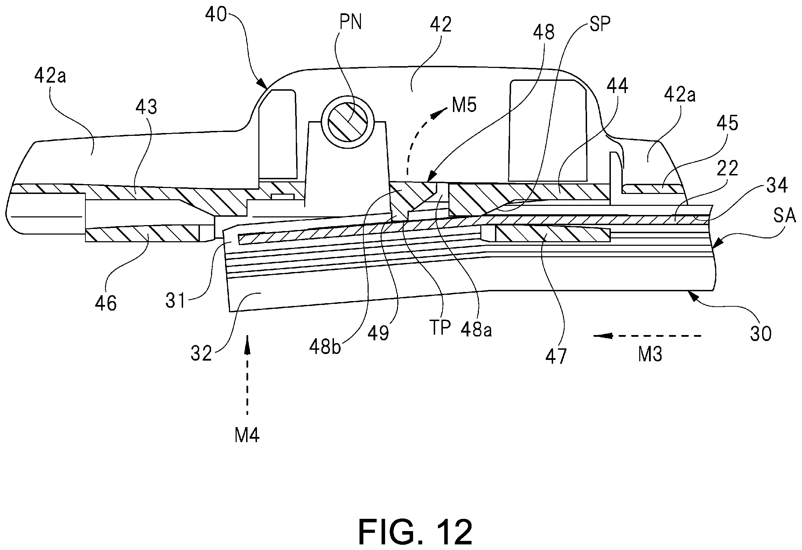

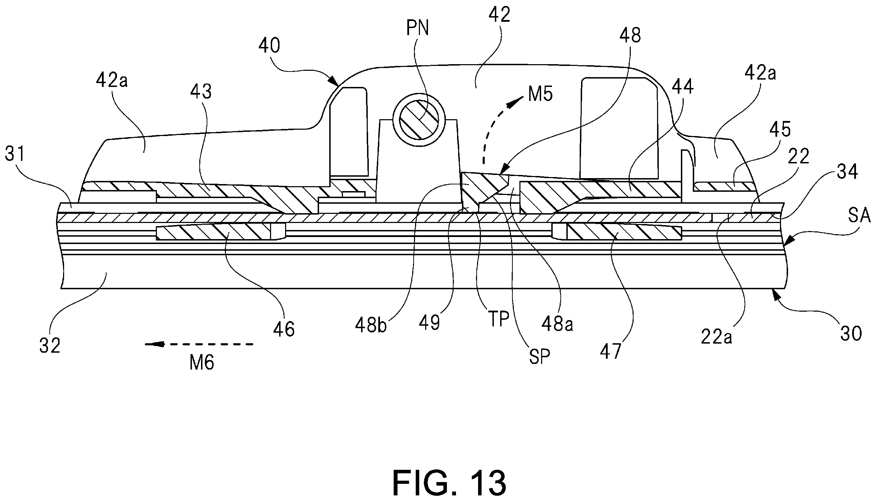

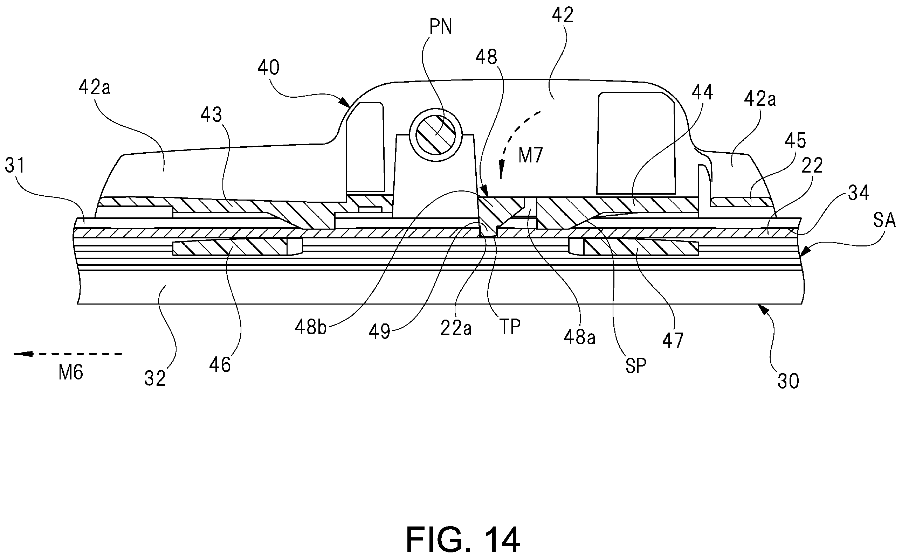

FIG. 11 is a cross-sectional view illustrating the assembly procedure (1) of the wiper blade; FIG. 12 is a cross-sectional view illustrating the assembly procedure (2) of the wiper blade; FIG. 13 is a cross-sectional view illustrating the assembly procedure (3) of the wiper blade; and FIG. 14 is a cross-sectional view illustrating the assembly procedure (4) of the wiper blade.

First, as shown in FIG. 11, a main holder 40 manufactured in advance in a separate manufacturing process is prepared. Further, a blade sub-assembly SA is prepared in which a pair of vertebrae 22 are assembled to a blade rubber 30.

Next, as shown by the dotted line arrow M1, one end part (tip end side) of the blade sub-assembly SA in the lengthwise direction is made to face the third bridging part 45 side in the lengthwise direction of the main holder 40. At this time, the blade sub-assembly SA is inclined with respect to the main holder 40 at a gentle inclination angle α° (approximately 5°). At this time, since it is sufficient that the relative angle between the main holder 40 and the blade sub-assembly SA in the direction perpendicular to the front glass 11 is "α°", the main holder 40 may be inclined at a gentle inclination angle α° with respect to the blade sub-assembly SA.

However, the main holder 40 and the blade sub-assembly SA may also be assembled in a straight state without having a relative angle to each other. In this case, the pushing load of the blade sub-assembly SA on the main holder 40 increases compared to the case where the main holder 40 is inclined at a gentle inclination angle α°.

Thereafter, the blade sub-assembly SA is continuously pushed in the direction of the dotted line arrow M1, and the pair of vertebrae 22 at one end part in the lengthwise direction of the blade sub-assembly SA are inserted between the second bridging part 44 and the second claw parts 47. Then, one end part in the lengthwise direction of the pair of vertebrae 22 passes between the second bridging part 44 and the second claw parts 47, as shown by the dotted line arrow M2. At this time, one end part in the lengthwise direction of the pair of vertebrae 22 is moved along the slope surface SP provided on the second claw part 47 side of the second bridging part 44. Thus, one end part in the lengthwise direction of the blade sub-assembly SA passes through the second bridging part 44 and the second claw parts 47 in a curved state.

Next, as shown by the dotted line arrow M3 in FIG. 12, the operation of inserting the blade sub-assembly SA into the main holder 40 continues. Then, as shown in FIG. 12, one end part in the lengthwise direction of the blade sub-assembly SA crosses over the pair of supporting protrusions 49 in an inclined state with respect to the main holder 40. At this time, since the pair of vertebrae 22 pass between the second bridging part 44 and the second claw parts 47 and are curved, and the tapered surfaces TP are provided on the second claw part 47 side of the supporting protrusions 49, the pair of vertebrae 22 easily pass through the pair of supporting protrusions 49.

Thereafter, when the operation of inserting the blade sub-assembly SA into the main holder 40 continues, one end part in the lengthwise direction of the blade sub-assembly SA reaches the vicinity of the first claw parts 46 of the main holder 40, as shown in FIG. 12. At this time, the pair of supporting protrusions 49 press the pair of vertebrae 22 downward in the figure (toward the front glass 11 side), and the tip end parts thereof slide into contact with the pair of vertebrae 22.

Next, as shown by the dotted line arrow M4 in the figure, one end part in the lengthwise direction of the blade sub-assembly SA is pressed toward the main holder 40 (opposite to the front glass 11 side), so that one end part in the lengthwise direction of the pair of vertebrae is inserted between the first bridging part 43 and the first claw parts 46. At that time, the pair of vertebrae 22 are pressed so as not to damage the lip part 32 of the blade rubber 30.

In this way, the pair of vertebrae 22 are inserted between the first bridging part 43 and the first claw parts 46 and push back the pair of supporting protrusions 49 to the side opposite to the front glass 11 side. Thus, the elastic arm part 48 is elastically deformed so as to be warped upward in the figure (on the side opposite to the front glass 11 side), as shown by the dotted line arrow M5.

Thereafter, as shown by the dotted line arrow M6 in FIG. 13, the operation of inserting the pair of vertebrae 22 between the first bridging part 43 and the first claw parts 46 continues. At this time, as shown by the dotted line arrow M5, the elastic arm part 48 remains elastically deformed by the pair of vertebrae 22, and the tip end parts of the pair of supporting protrusions 49 are in sliding contact with the pair of vertebrae 22.

Next, as shown by dotted line arrow M6 in FIG. 14, the operation of inserting the pair of vertebrae 22 between the first bridging part 43 and the first claw parts 46 further continues. Then, the pair of supporting protrusions 49 enter the elongated holes 22a of the pair of vertebrae 22, respectively. In this way, as shown by the dotted line arrow M7, the elastic arm part 48 returns to the original straight state from the elastically deformed state, and the supporting protrusions 49 are completely engaged with the elongated holes 22a.

Thus, further mounting operation (relative movement) of the blade sub-assembly SA to the main holder 40 is restricted, and the operation of assembling the blade sub-assembly SA to the main holder 40 is completed. In this way, the blade sub-assembly SA is determined to be in a regular position with respect to the main holder 40.

Thereafter, the sub holders 21 (see FIG. 1) are mounted to the blade sub-assembly SA extending on two sides in the lengthwise direction of the main holder 40, respectively. At this time, the pair of vertebrae 22 are inserted into the pair of vertebra housing parts 21b (see FIG. 5), respectively. Here, since the vertebrae 22 enter the vertebra housing parts 21b through a gap, the sub holders 21 may be easily mounted to the blade sub-assembly SA.

Next, a pair of caps 23 (see FIG. 1) are fixed on two sides of the pair of vertebrae 22 in the lengthwise direction. In this way, the end parts of the sub holders 21, the vertebrae 22, and the blade rubber 30 are covered, and the assembly of the wiper blade 10 is completed.

As detailed above, according to the wiper blade 10 in Embodiment 1, by engaging the supporting protrusions 49 of the main holder 40 with the elongated holes 22a of the vertebrae 22, movement of the vertebrae 22 in the lengthwise direction with respect to the main holder 40 is restricted. Thus, by integrating the supporting protrusions 49 into the main holder 40, the number of parts may be reduced compared to the past, which in turn improves assembly workability.

Further, according to the wiper blade 10 in Embodiment 1, when the wiper blade 10 is viewed from the direction perpendicular to the front glass 11, the blade rubber 30 and the supporting protrusions 49 are provided in non-overlapping positions, respectively. In this way, for example, by pressing the supporting protrusions 49 using a tapered tool (such as a screwdriver), the vertebrae 22 may be unlocked from the main holder 40. Thus, the maintainability of the wiper blade 10 may be improved.

Furthermore, according to the wiper blade 10 in Embodiment 1, the main holder 40 has an elastic arm part 48 that is elastically deformable in the direction perpendicular to the front glass 11, and supporting protrusions 49 are mounted on the tip end side of the elastic arm part 48. In this way, the amount of movement of the supporting protrusions 49 when the elastic arm part 48 is elastically deformed may be increased. As a result, the supporting protrusions 49 may be engaged with the elongated holes 22a without significantly warping the elastic arm part 48. Thus, the workability of assembling the wiper blade 10 may be improved.

Further, according to the wiper blade 10 in Embodiment 1, the elongated holes 22a extend in the lateral direction of the vertebrae 22, and the supporting protrusions 49 are movable inside the elongated holes 22a only in the lateral direction of the vertebrae 22. As a result, when a relatively large load is applied in the wiping direction of the wiper blade 10, the supporting protrusions 49 move inside the elongated holes 22a, and the large load is hence prevented from being applied to the supporting protrusions 49. Thus, damage to the supporting protrusion 49 (low rigidity) made of plastic due to the vertebrae 22 (high rigidity) made of stainless-steel plate may be prevented.

Furthermore, according to the wiper blade 10 in Embodiment 1, a connecting pin PN to which the wiper arm 12 is rotatably connected is provided between the first claw parts 46 and the second claw parts 47 of the main holder 40, and the supporting protrusions 49 and the connecting pin PN are provided offset in the lengthwise direction of the vertebrae 22. Thus, when the main holder 40 is viewed from the direction perpendicular to the front glass 11, the connecting pin PN and supporting protrusions 49 (elastic arm part 48) do not overlap. Thus, the shape of the main holder 40 is such that undercuts do not occur, and the mold may be easily released from the main holder 40 after injection molding, thereby improving the moldability of the main holder 40.

Further, according to the wiper blade 10 in Embodiment 1, as described above, the number of parts may be reduced and assembly workability may be improved, thereby saving manufacturing energy. In this way, especially Goal 7 (ensure access to affordable, reliable, sustainable and modern energy for all) and Goal 13 (take urgent action to combat climate change and its impacts) in the Sustainable Development Goals (SDGs) set by the United Nations may be realized.

### [Embodiment 2]

Next, Embodiment 2 of the present invention will be described in detail with reference to the drawings. It is noted that parts having the same functions as the above-mentioned Embodiment 1 are given the same symbols, and detailed description thereof will be omitted.

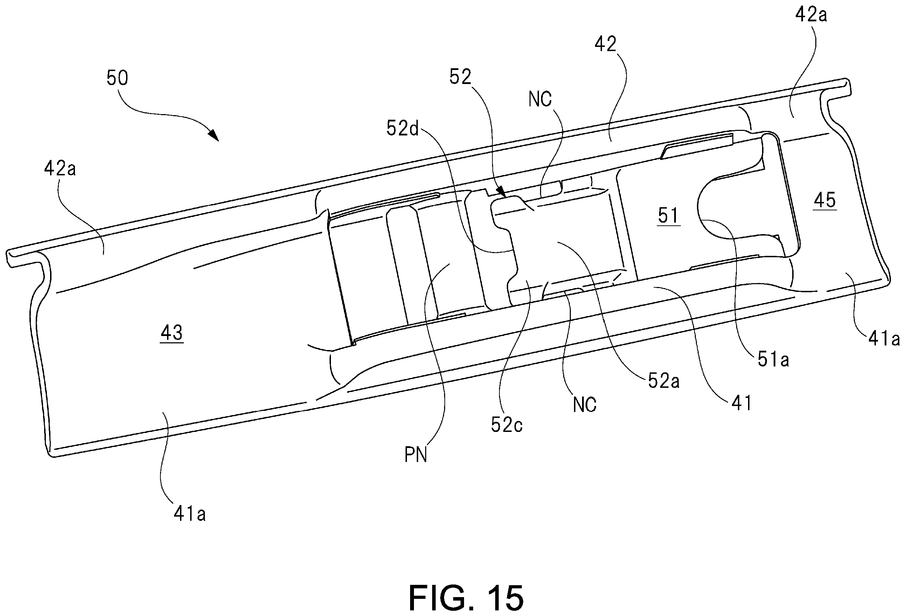

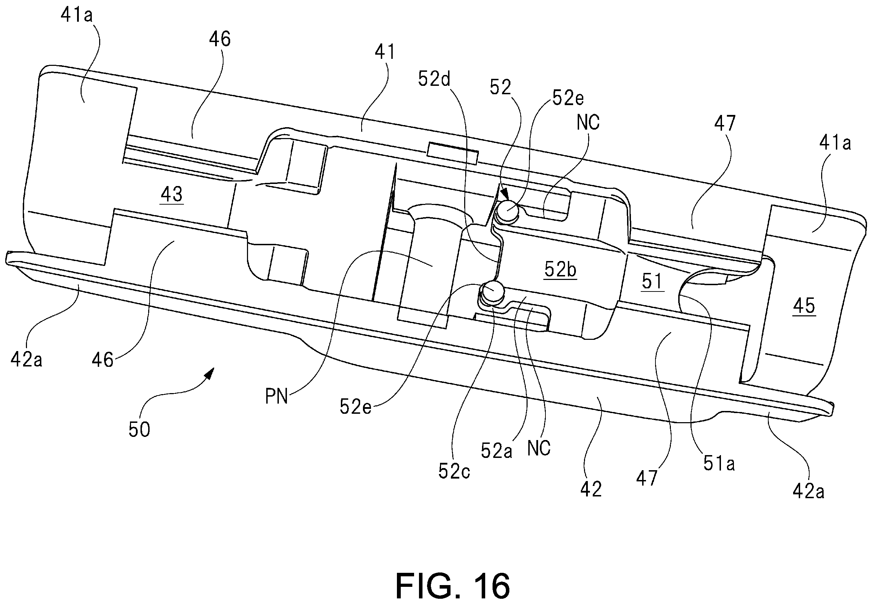

FIG. 15 is a perspective view of the main holder of Embodiment 2 viewed from the wiper arm side; and FIG. 16 is a perspective view of the main holder of Embodiment 2 viewed from the blade rubber side.

As shown in FIG. 15 and FIG. 16, the main holder (connecting member) 50 of Embodiment 2 is different from the main holder 40 (see FIG. 9 and FIG. 10) of Embodiment 1 in the shape of the second bridging part 51 and the shape of the elastic arm part (arm part) 52.

The second bridging part 51 is provided with a substantially semicircular notched recess part 51a. The notched recess part 51a is opened toward the third bridging part 45 in the lengthwise direction of the main holder 50 and occupies approximately half of the second bridging part 51. In this way, the main holder 50 is made lighter. Further, the notched recess part 51a functions as a "thickness reducing part" to prevent sink marks (distortion, etc.) from occurring in the second bridging part 51.

Furthermore, the width of the arm part main body 52a forming the elastic arm part 52 is larger than that of the arm part main body 48a of Embodiment 1 (see FIG. 9 and FIG. 10). Specifically, the notched parts NC provided on two sides of the arm part main body 52a are provided closer to the first and second long side wall parts 41 and 42, respectively, than in Embodiment 1. Thus, the rigidity of the arm part main body 52a is higher than that of the arm part main body 48a of Embodiment 1.

Further, a recessed groove 52b is provided on the front glass 11 side of the arm part main body 52a (see FIG. 16), thereby suppressing the weight increase caused by making the arm part main body 52a wider. It is noted that the recessed groove 52b also functions as a "thickness reducing part" similarly to the notched recess part 51a.

Furthermore, a depressed part 52d is provided in a vertebra supporting part 52c that is integrally provided at the tip end part in the lengthwise direction of the arm part main body 52a so as to be recessed in the lengthwise direction of the main holder 50. The depressed part 52d is provided at a location corresponding to the recessed groove 52b in the lengthwise direction of the main holder 50. In this way, compared to Embodiment 1, the rigidity on two sides of the vertebra supporting part 52c in the lengthwise direction is weakened, and a pair of supporting protrusions (protruding part) 52e may be individually engaged with the elongated holes 22a of the vertebrae 22 (see FIG. 4 and FIG. 8). Thus, the "operational feeling" during assembly may be improved.

Further, in the pair of supporting protrusions 52e of Embodiment 2, the tapered surfaces TP at the tip end parts (see FIG. 10) are omitted.

Embodiment 2 formed as described above may also have the same effects as Embodiment 1 described above. In addition, in Embodiment 2, the rigidity of the arm part main body 52a may be increased compared to Embodiment 1. Thus, the supporting protrusions 52e are less likely to come off the elongated holes 22a due to vibrations generated during the operation of the wiper device or distortion due to heating under the hot sun. Further, since the molding accuracy of the main holder 50 may be improved, variations in the main holder 50 may be further suppressed. Furthermore, since the "operational feeling" during assembly may be improved, the occurrence of assembly defects may be further suppressed.

The present invention is not limited to the embodiment described above, and may be modified in various ways without departing from the gist thereof. For example, in each of the above embodiments, although the wiper blade 10 is applied to the wiper device for wiping the front glass 11 of a vehicle such as an automobile, the present invention is not limited thereto, and the wiper blade 10 may also be applied to wiper devices mounted on the rear side of a vehicle such as an automobile, a wiper device mounted on a ship, an aircraft, a railway vehicle, etc.

In addition, the material, shape, size, number, installation location, etc. of each component in the embodiment described above are arbitrary as long as they may achieve the present invention, and are not limited to the embodiment described above.

### Reference Signs List

10: Wiper blade, 11: Front glass (wiped surface), 12: Wiper arm (arm), 20: Rubber holder, 21: Sub holder, 21a: Second fin part, 21b: Vertebra housing part, 22: Vertebra, 22a: Elongated hole (engagement hole), 22b: Cap fixing hole, 23: Cap, 30: Blade rubber, 31: Main body part, 32: Lip part, 33: Neck part, 34: Groove part, 40: Main holder (connecting member), 41: First long side wall part, 41a: Low floor part, 42: Second long side wall part, 42a: First fin part, 43: First bridging part, 44: Second bridging part, 45: Third bridging part, 46: First claw part (first holding part), 47: Second claw part (second holding part), 48: Elastic arm part (arm part), 48a: Arm part main body, 48b: Vertebra supporting part, 49: Supporting protrusion (protruding part), 50: Main holder (connecting member), 51: Second bridging part, 51a: Notched recess part, 52: Elastic arm part (arm part), 52a: Arm part main body, 52b: Recessed groove, 52c: Vertebra supporting part, 52d: Depressed part, 52e: Supporting protrusion (protruding part), G: Engagement groove, NC: Notched part, PN: Connecting pin, S: Gap, SA: Blade sub-assembly, SL: Inclined surface, SP: Slope surface, TP: Tapered surface, UC: U-shaped clip

## Claims

1. A wiper blade connected to an arm swung by a driving source and wiping a wiped surface, the wiper blade comprising:
a connecting member, connected to the arm;
a vertebra, held by the connecting member and curved with a prescribed curvature; and
a blade rubber, held by the vertebra and in contact with the wiped surface,
the connecting member comprising: a first holding part and a second holding part, holding the vertebra with an interval in a lengthwise direction of the vertebra; and a protruding part, provided between the first holding part and the second holding part and protruding toward the vertebra, and
the vertebra comprising an engagement hole to which the protruding part is engaged.

2. The wiper blade according to claim 1, wherein
when the wiper blade is viewed from a direction perpendicular to the wiped surface, the blade rubber and the protruding part are provided in non-overlapping positions, respectively.

3. The wiper blade according to claim 1, wherein
the connecting member has an arm part that is elastically deformable in a direction perpendicular to the wiped surface, and
the protruding part is provided on a tip end side of the arm part.

4. The wiper blade according to claim 1, wherein
the engagement hole is an elongated hole extending in a lateral direction of the vertebra, and
the protruding part is movable inside the elongated hole only in a lateral direction of the vertebra.

5. The wiper blade according to claim 1, wherein
a connecting pin to which the arm is rotatably connected is provided between the first holding part and the second holding part of the connecting member, and
the protruding part and the connecting pin are provided offset in a lengthwise direction of the vertebra.
